# EUROPEAN PATENT APPLICATION

(11) **EP 2 551 948 A1**
(43) Date of publication of application: **30.01.2013**
(21) Application number: 11006062.1
(22) Date of filing: 25.07.2011
(51) Int. Cl.: H01M 10/06, H01M 10/08, H01M 10/12, H01M 10/42, H01M 10/44

(54) **Lead storage battery**

(71) Applicant: Masstech Co., Ltd., Setagaya-ku Tokyo (JP)
(72) Inventor: Emoto, Masafumi, Tokyo (JP)
(74) Representative: Forstmeyer, Dietmar

(57) **Abstract**

A lead storage battery which prevents deterioration due to sulfation, wherein a nonionic dispersing agent is contained in an electrolytic solution, and a lead sulfate film removing device for applying a weak pulse current with a number of pulses of 4000 to 7000 times per second and a voltage amplitude of ±2 to ±5 V is incorporated.

## Description

### Technical Field

The present invention relates to a technique for preventing deterioration of a lead storage battery, which removes a lead sulfate film by dissolving reduction or decomposing reduction of an inactive lead sulfate film generated due to a sulfation phenomenon that is said to be a main cause of deterioration of a lead storage battery, and the present invention belongs to the field of electrochemistry.

### Background Art

Lead storage batteries include a shield-type (closed-type) lead storage battery in which an electrode is impregnated with an electrolytic solution to achieve a small size and high performance and which does not require replenishment of an electrolytic solution, in addition to an open-type lead storage battery used for general purpose and capable of replenishing an electrolytic solution. Both types of lead storage batteries are configured by a positive electrode PbO₂ (lead dioxide), a negative electrode (Pb), and an electrolytic solution H₂SO₄ (diluted sulfuric acid).

Causes of deterioration of these lead storage batteries in usual use are thought to include decrease in capacity by an inactive lead sulfate film generated due to a sulfation phenomenon, and deterioration when an active material drops out according to the use of electrodes.

The latter cause is not particularly regarded as a problem because electrode lattice is improved, for example, electrode lattice is made of an alloy, and recently the lifetime of electrodes has been said to be 10 years or more.

As to the former cause, various preventive measures have been employed for improving durability.

In order to prevent a transient voltage fluctuation, preventive measures, for example, a technique for suppressing sulfation by incorporating a capacitor in parallel to a lead storage battery, and addition of additives for suppressing the occurrence of sulfation, are employed; however, any of which cannot prevent sulfation completely.

Furthermore, a technique for suppressing sulfation by installing a pulse generator is not also satisfactory for the below-mentioned reasons.

In a technique described in Patent literature 1, a pulse current having a short pulse width and being accompanied by the skin effect is output, thereby intensively decomposing the surface portion of a lead sulfate film so as to remove the lead sulfate film.

The skin effect occurs in conductors. A lead sulfate film per se is an insulating material. Both positive and negative electrodes have an active material obtained by forming powder into a paste and have a large surface area, and a lead sulfate film deposited on the surface in a form of a film has a large concavity and convexity. Therefore, the skin effect is not thought to occur easily.

Furthermore, a separator is provided between the both electrodes, and an electric current flows therebetween through an electrolytic solution. Thus, an electric current flows in porous pores of the lead sulfate film that is impregnated with the electrolytic solution, whereby an electric current passes between the both electrodes. Thus, it is considered that the skin effect does not easily occur.

Some weak current pulse generators for regenerating a lead storage battery are commercially available. When such a generator is installed on a lead storage battery at all times, sulfation occurs from a portion in which an electric current does not easily flow because of the ununiformity of current distribution of an electrode, and an inactive lead sulfate film is enlarged from the portion so as to cause deterioration.

Patent literature 1; JP No. 3079212

### Summary of Invention

An object of the present invention is to provide a technique relating to a lead storage battery free from deterioration, which completely prevents deterioration due to sulfation in a lead storage battery.

The present inventors carried out a discharge test in which a nonionic dispersing agent and a lead sulfate film removing device based on a technique for regenerating a lead storage battery disclosed in Patent Application No. 2009-222209 are used, the nonionic dispersing agent is placed in a vehicle-mounted lead storage battery, and the lead sulfate film removing device is placed in the lead storage battery for two years. As a result of the test, the present inventors have found that no deterioration occurred.

The present inventors have variously investigated the results of the above-mentioned discharge test. As a result, they have obtained the following findings: a lead sulfate film removing device, i.e., a weak current pulse generator is not satisfactory in preventing deterioration, because an inactive lead sulfate film is generated in a portion in which an electric current is weak due to ununiformity in electric current distribution of the electrode in a decomposing reduction reaction of a lead storage battery. However, by combining a dissolving reduction reaction with the nonionic dispersing agent, the inactive lead sulfate film can be removed, and therefore, deterioration can be prevented completely.

Furthermore, the present inventors have obtained the following findings from the result of the test of removing an inactive lead sulfate film of a lead storage battery deteriorated due to sulfation: by applying a weak current pulse with a number of pulses of 4000 to 7000 times per second and a voltage amplitude of ±2 to ±5 V with the use of a lead sulfate film removing device composed of an oscillator and a pulse current generator and a charger, a sulfate film generated due to a sulfation phenomenon can be gradually decomposed and reduced by the shock of pulses without causing drop-out and exfoliation of the lead sulfate film.

The present inventors have obtained the following findings: in a technique for preventing deterioration using decomposing reduction and dissolving reduction, when a nonionic dispersing agent is placed and the above-mentioned lead sulfate film removing device is incorporated, a lead storage battery free from deterioration can be obtained.

The present invention is carried out based on the above-mentioned findings, and provides a technique relating to the below-mentioned lead storage battery in which deterioration due to sulfation of the lead storage battery is prevented.
A lead storage battery capable of preventing deterioration due to sulfation, wherein a nonionic dispersing agent is contained in an electrolytic solution, and a lead sulfate film removing device for applying a weak pulse current with a number of pulses of 4000 to 7000 times per second and a voltage amplitude of ±2 to ±5 V is incorporated.

### Advantageous Effects of Invention

The lead storage battery of the present invention can be remarkably reduced in size and cost as compared with a conventional vehicle-mounted lead storage battery having capacity whose size is twice as large as necessary capacity with taking a change over time of the capacity into consideration. Therefore, the lead storage battery of the present invention can be replaced with a small-size and high-performance shield-type lead storage battery, thus enabling the size and weight to be remarkably reduced.

### Brief Description of Drawings

FIG 1 is a schematic explanatory diagram showing a lead sulfate film removing device composed of an oscillator and a pulse current generator used in the present invention.
FIG 2 is a graph showing one example of a signal wave (output current) from the oscillator to the pulse current generator.
FIG 3 is a graph showing one example of a waveform of a pulse current applied to the lead storage battery.
FIG 4 is a graph showing an output waveform of an oscillograph of a weak pulse current applied in Example 1.

### Description of Embodiments

As a nonionic dispersing agent used in the present invention, an agent which is easily dissolved in an electrolytic solution containing diluted sulfuric acid is preferable, and examples thereof include high-density polyoxyethylene distyrenated phenyl ether as a pale yellow solid, polyoxyethylene distyrenated phenyl ether as a pale yellow viscous liquid, high-density polyvinyl alcohol (hereinafter, referred to as "PVA") as a white solid, PEG-4 steamide, and the like.

The addition amount of the nonionic dispersing agent is not particularly limited, and the addition amount is usually preferably about 0.5 to 1.5% and more preferably about 1 to 1.2% in the weight ratio with respect to the electrolytic solution.

The following Table 1 shows the result of examination of the dissolved amount of lead sulfate when 1% nonionic dispersing agent (high-density polyoxyethylene distyrenated phenyl ether as a pale yellow solid, polyoxyethylene distyrenated phenyl ether as a pale yellow viscous liquid, and high-density PVA as a white solid) in the weight ratio was added to 100 ml of pure water containing lead sulfate powder (weight ratio: 1%), and the mixture was heated at 70°C and was stirred with a stirrer at 500 rpm for 40 minutes.

**[Table 1]**

| Nonionic dispersing agent | Dissolved amount (mg) |
|---|---|
| High-density polyoxyethylene distyrenated phenyl ether | 40 |
| Polyoxyethylene distyrenated phenyl ether | 30 |
| High-density polyvinyl alcohol (PVA) | 35 |

Since the function of the nonionic dispersing agent has temperature dependency, heating is carried out so that the temperature of an outer wall of a lead storage battery becomes preferably 50 to 65°C, and more preferably 55 to 60°C. This condition is easily satisfied with a vehicle-mounted lead storage battery installed in an engine room.

Furthermore, it is considered that even if a fine lead sulfate film is formed due to a sulfation phenomenon, since the lead sulfate film does not allow electricity to pass, the lead sulfate film per se becomes a resistor and produces heat, whereby a decomposing reduction reaction is caused.

The present invention permits dissolving reduction by allowing the lead sulfate film generated due to sulfation to generate heat as mentioned above.

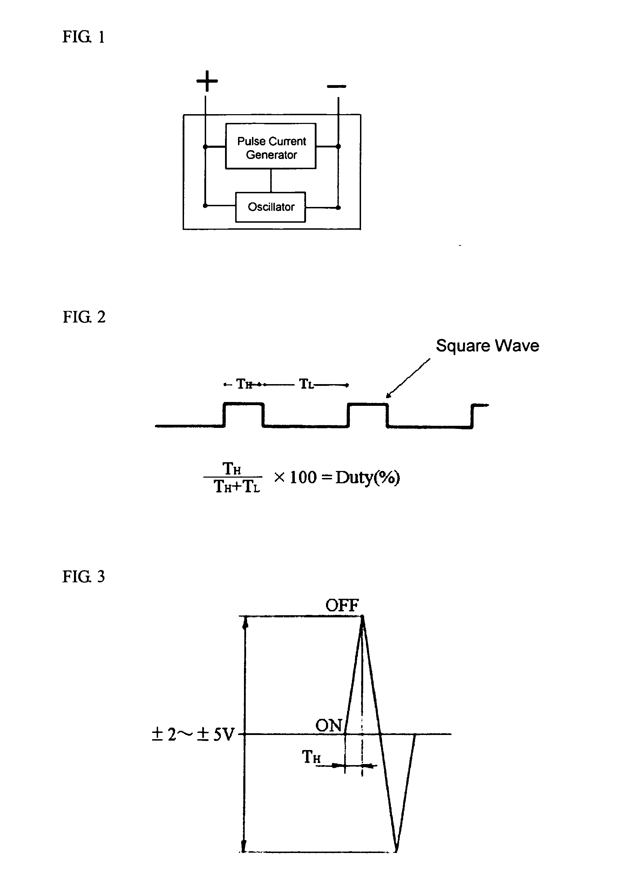

It is preferable that the weak pulse current is applied by using a lead sulfate film removing device composed of an oscillator and a pulse current generator shown in FIG 1. The lead sulfate film removing device is used in a state where it is installed in the lead storage battery at all times.

The oscillator of the lead sulfate film removing device uses a timer IC as an oscillation circuit, in which a signal wave (an output current) to the pulse current generator is set so that it becomes a square wave as shown in FIG 2 and the operating range (Duty) thereof becomes 3 to 5%, and a pulse is allowed to rapidly rise in the pulse current generator receiving the signal wave to secure an output of a pulse current.

The pulse current generator in the lead sulfate film removing device drives an electronic switch such as MOSFET by the signal wave output from the oscillator, and a waveform of the pulse current applied to the lead storage battery is made to be, for example, a waveform shown in FIG 3.

By increasing the number of pulses of the weak pulse current, the efficiency of decomposition of the lead sulfate film is thought to be increased, but heat is generated, and therefore the number of pulses actually has a limitation. The number of pulses is appropriately set in balance with regenerating efficiency. Specifically, the number of pulses is about 4000 to 7000 times per second, and preferably 5000 to 6000 times per second.

The weak pulse current has amplitude of a pulse voltage in the range from ±2 to ±5 V, and preferably in the range from ±2.5 to ±4 V, and has the current value thereof in the range from 20 to 100 mA, and preferably in the range from 50 to 80 mA. It is preferable because exfoliation and drop-out of a lead sulfate film can be prevented and the electrode is not damaged.

When the weak pulse current is applied as mentioned above, a lead sulfate film generated due to sulfation by shock of pulses can be decomposed and reduced.

### Examples

Hereinafter, the present invention is further described more specifically with reference to Examples, but the present invention is not limited to these Examples unless it is beyond the scope of the summary.

### Example 1

An open-type lead storage battery 55-24L that had been mounted on a vehicle for four years was regenerated and subjected to a test.

A voltage at the starting time was 13.2 V, and capacity in a 10 A discharge test was 32 Ah.

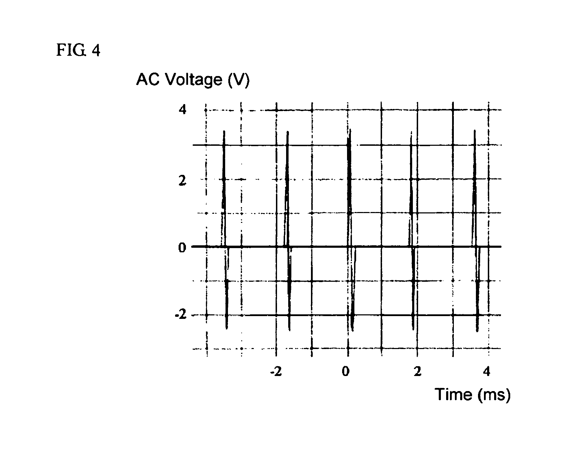

To this lead storage battery, high-density polyoxyethylene distyrenated phenyl ether was added so that 1CC (1.2 % by weight with respect to the electrolytic solution) was added to each cell. A lead sulfate film removing device shown in FIG. 1, which applies a weak pulse current (number of pulses: 5400 times per second, AC pulse voltage of the applied current: +3.4 V, -2.4 V) of a waveform shown in FIG. 4, was installed.

After two years had passed and after about 100,000 km of driving, a voltage was 13.1 V and the capacity of 10 A discharge test was 32 Ah.

Even when two years had passed, no deterioration phenomena were recognized, it was demonstrated that addition of a nonionic dispersing agent to a lead storage battery and use together with a lead sulfate film removing device were effective in preventing deterioration due to sulfation.

## Claims

1. A lead storage battery capable of preventing deterioration due to sulfation, wherein a nonionic dispersing agent is contained in an electrolytic solution, and a lead sulfate film removing device for applying a weak pulse current with a number of pulses of 4000 to 7000 times per second and a voltage amplitude of ±2 to ±5 V is incorporated.

2. The lead storage battery according to claim 1, wherein the lead sulfate film removing device includes an oscillator and a pulse current generator.

3. The lead storage battery according to claim 1 or 2, wherein the number of pulses of the weak pulse current is 5000 to 6000 times per second, and the voltage amplitude is in the range from ±2.5 to ±4 V.

4. The lead storage battery according to claim 1, wherein an addition amount of the nonionic dispersing agent is 0.5 to 1.5% by weight with respect to the electrolytic solution.

5. The lead storage battery according to any one of claims 1 to 4, wherein the nonionic dispersing agent is high-density polyoxyethylene distyrenated phenyl ether or high-density polyvinyl alcohol.
